# EUROPEAN PATENT SPECIFICATION

(11) **EP 1 750 028 B1**
(45) Date of publication and mention of the grant of the patent: **12.03.2008**
(21) Application number: 06253262.7
(22) Date of filing: 23.06.2006
(51) Int. Cl.: F16D 55/227, F16D 65/56

(54) **Disc brake caliper**
Bremssattel
Etrier de frein

(30) Priority: 06.08.2005 GB 0516201
(43) Date of publication of application: 07.02.2007
(73) Proprietor: Meritor Heavy Vehicle Braking Systems (UK) Limited, Cwmbran, Gwent NP44 3XU (GB)
(72) Inventor: Roberts, Paul, Newport NP20 5QU (GB)
(74) Representative: Jones, John Bryn

(56) References cited:
- WO-A-93/09361
- WO-A-96/36819
- DE-A1- 3 539 960
- DE-C1- 19 903 620
- US-A- 5 161 648

## Description

This invention relates to disc brake calipers, and particularly to single sided calipers adapted to apply one brake pad reactively, via a bridge.

Conventional disc brake calipers have opposed brake pads adapted to be urged against opposite radial surfaces of a brake rotor. In motor cars actuation is usually hydraulic, and may be via opposed pistons. An opposed piston caliper is however relatively expensive, and somewhat bulky on the outboard side. Accordingly single sided sliding calipers have been developed in which an inboard piston applies the inboard pad directly, and the outboard pad is applied indirectly via a bridge attached to the piston housing; necessarily the piston housing must be allowed to slide inboard on a carrier to accommodate wear of the outboard pad. Space must therefore be provided to allow for this inboard movement of the brake caliper.

Another type of disc brake caliper can be seen in WO93/09361, which has an adjusting mechanism to compensate for wear of an outboard brake pad. In this system the brake caliper moves outboard as the inner pad wears. Sufficient space must therefore be provided to allow for this outboard movement of the brake caliper.

In the case of disc brakes for trucks, actuation is normally via compressed air and large actuators, which may be 200 mm in diameter and 300 mm in length. Such actuators can only be mounted inboard for practical reasons, and thus single sided brake calipers are usual.

Brake pads of trucks have a considerable wearing thickness, typically about 20 mm. Furthermore, the brake disc itself might typically wear 3 mm on each face between new and worn conditions. Thus, conventionally an air brake actuator must be allowed to move inboard by about 25 mm between the new and worn-out conditions of the outboard brake pad. This allowance is an awkward restriction for truck designers, and would be better avoided.

According to the invention there is provided a disc brake caliper comprising an inboard side housing, an actuation element movable relative to said housing for direct application for an inboard side brake pad (119), a bridge (120) from said housing to the outboard side and for direct application of an outboard side brake pad (121), and an inboard side slack adjuster (124) between said bridge and housing and adapted to incrementally move said bridge inboard to compensate in use for wear of an outboard side brake pad,
characterised in that the caliper further includes an inboard pad slack adjuster (126) between said housing and actuation element, and adapted to incrementally move said actuation element outboard to compensate in use for wear of an inboard side brake pad.

By placing a slack adjuster for the outboard pad on the inboard side, the invention both minimises bulk of the caliper at the outboard side, and allows the inboard side housing to remain in a substantially constant position. Slight movement of the inboard side housing may be necessary in order to take up the outboard side running clearance and provide the necessary travel for the slack adjuster, but movement in the range 2-3 mm is sufficient. Since the air actuator is attached to the inboard side housing, it also is maintained in a substantially constant position.

Preferably the caliper further includes an inboard pad slack adjuster between said housing and actuation element, and adapted to incrementally move said actuation element outboard to compensate in use for wear of an inboard side brake pad.

Such a caliper provides for compensation of wear of both pads and reduces travel of the inboard actuation element. According to predicted pad wear rates, the inboard and outboard slack adjusters may have differential slack adjuster travel.

The bridge may extend on the inboard side of said housing to define a spacing, in which case the inboard side slack adjuster spans said spacing.

Alternatively said bridge is wholly on the outboard side of said housing at a spacing, and the inboard side slack adjuster spans this spacing.

The caliper may further include a carrier adapted for rigid fixing relative to a vehicle axle, the carrier having slides, and the bridge being mounted on the slides. The slides may comprise cylindrical pins engageable as a sliding fit in corresponding apertures, and the pins may be fixed relative to the carrier.

The carrier may have both inboard and outboard slides, and the bridge may have inboard and outboard legs for respective engagement with these slides. The housing may also be adapted for sliding engagement with the inboard slides.

A caliper according to the invention is suitable for both fixed and sliding disc brake rotors.

Other features of the invention will be apparent from the following description of several embodiments of the invention shown by way of example only in the accompanying drawings in which:-
Fig. 1 is a part-sectional elevation of a conventional truck disc brake installation;
Fig. 2 corresponds to Fig. 1 and shows a first embodiment of the invention;
Fig. 2A is a pictorial exploded view of figure 2, illustrating a bridge, housing and, in part, a carrier.
Fig. 3 is an exploded pictorial view of a caliper housing and bridge of a second embodiment;
Fig. 4 is a pictorial view of the housing of Fig. 3;

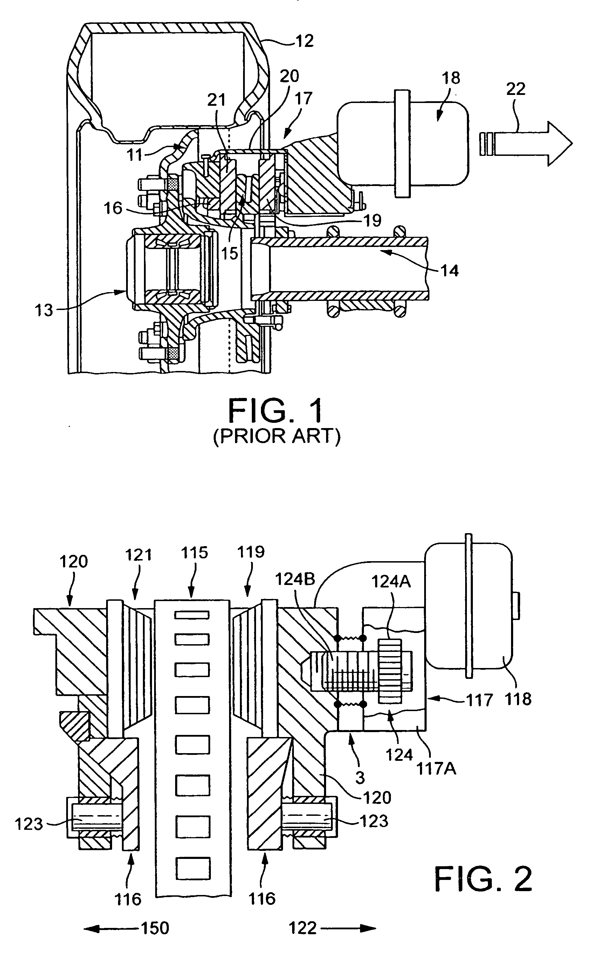

With reference to the drawings, Fig. 1 illustrates a conventional truck disc brake. A road wheel 11 and tyre 12 is fixed to the rotatable hub 13 of an axle 14. A brake rotor 15 is coupled for rotation with the hub 13.

A carrier 16 is rigidly fixed to the axle 14 and carries a sliding brake caliper 17 having an air actuator 18 mounted thereon. The actuator is adapted to directly apply the inboard brake pad 19, and via a bridge 20 the outboard pad 21. Thus, as the outboard pad wears away, the actuator 18 moves inwardly in the direction of arrow 22, typically by up to 23 mm.

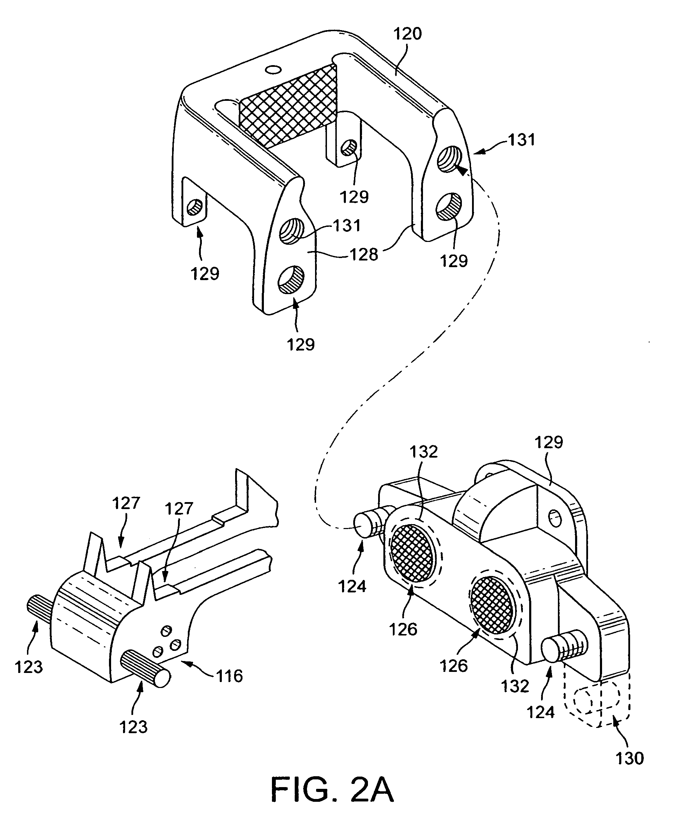

Fig. 2 and 2A schematically illustrates a first embodiment of the invention, in which like parts carry the corresponding reference numeral increased by one hundred. Thus a rotor 115 is braked by opposed brake pads 119,121. A carrier 116 supports a sliding caliper 117 on cylindrical pins 123, and actuation is via an actuator 118. Sliding caliper 117 includes a caliper body 117A.

A bridge 120 is connected to the caliper body 117A on the inboard side via an incremental slack adjuster 124.

In summary in use the actuator 118 applies the inboard pad 119 via adjustable tappets 126 (also known as slack adjusters) of conventional kind, and the outboard pad 121 via the slack adjuster 124 and bridge 120. It will be appreciated that as the outboard pad wears, the slack adjuster 124 will incrementally decrease in length, thus shifting the bridge 120 inwardly in the direction of arrow 122. Meanwhile as the inboard pad 119 wears, slack adjuster 126 will incrementally increase in length in the conventional manner. Thus, on the assumption that pads 121 and 119 wear at the same rate, and the slack adjusters 124 and 126 are geared to adjust at the same rate, then the actuator 118 and caliper body 117A remain substantially in the same place (i.e. they only move by the amount of running clearance between the pad 119 and the disc 115). The pad 121 and bridge 120 move inboard in the direction of arrow 122 by an amount equal to the wear on pad 121 plus the wear on the outboard friction face of the rotor 115, and pad 119 moves outboard in the direction of arrow 150 by an amount equal to the wear on pad 119 plus the wear on the inboard friction face of the rotor 115.

The running clearance is typically about 1 mm, and thus maximum reciprocation of the actuator 118 and housing 117A is restricted in practice to 2-3 mm, rather than 23-25 mm of the prior art.

In more detail bridge 120 has depending legs 128 which extend on either side of the axially fixed rotor 115. Apertures 129 of the legs 128 are located on slide pins 123 of the carrier 116 which in use is rigidly fixed to the vehicle axle. Shoulders 127 provide bearing surfaces for the inboard and outboard brake pads (119 and 121). As will be appreciated, the slide 123 pins permit limited reciprocation of the bridge 120.

The inboard side of the caliper comprises the caliper body 117A (in the form of a housing) attached to the bridge 120 via slack adjusters 124 engageable in threaded holes 131 of the bridge. As illustrated, the slack adjusters 124 provide incremental adjustment by the provision of screw threads.

The housing 117A has a flange 129 for attachment of the brake actuator 118. The actuator operates tappets 126 for urging the inboard brake pad 119 against the brake rotor.

The principle of operation of brake actuator 118 and tappet 126 is known. An example of such an arrangement can be found in US6435319 to which the reader is directed for a further explanation of operation. However, in summary actuator 118 includes a push rod which operates a lever within housing 117A. The lever is connected to an eccentrically mounted shaft. Operation of the push rod of actuator 118 causes the lever to rotate the eccentrically mounted shaft, which in turn forces the tappets 126 in the outboard direction 150. Tappets 126 are in engagement with the pad backplate of the inboard brake pad 119 and hence the inboard brake pad 119 is forced against the rotor 115, thereby causing braking.

The tappet assemblies 126 are adjustable in length, in a known manner, to compensate for wear of the inboard brake pad. Accordingly, the tappet assemblies 126 may be considered to act as slack adjusters for the inboard brake pad. Tappet assemblies 126 include rotatable gears, similar to those shown in US6435319, which adjust the length of the tappet assemblies in a known manner. These gears, illustrated schematically as part 132,engage gear 124A of slack adjusters 124. Gear 124A is rotationally fast with threaded portion 124B of slack adjuster 124. Thus, it would be appreciated that as the length of the tappet assemblies 126 adjusts, a corresponding adjustment is made to slack adjuster 124.

It will be appreciated that in further embodiments, different actuators could be used and similarly different slack adjusters from tappet assemblies 126 could be used in respect of the inboard brake pads. In particular, certain known tappet assemblies are driven via a chain arrangement (as opposed to the above mentioned gear arrangement) and such slack adjusters are equally applicable to the present invention.

Optionally, the housing 117A may have depending legs 130 (illustrated in dotted outline) engageable on extensions of the slide pins 123.

Application of the inboard pad to the brake rotor causes a reaction which applies the outboard pad via the bridge 120. The slack adjusters 124 allow running clearance to be maintained whilst compensating for wear of the outboard pad, by allowing the bridge 120 to more closely approach the housing 117A.

The assembly of bridge 120 and housing 117A floats by an amount equal to the outboard running clearance and the minimum effective stroke of the slack adjuster, in practice about 2-3 mm. Thus the brake actuator is maintained in substantially the same position as the outboard pad wears.

The optional legs 130 may be required to provide additional guidance and support for the housing 117A.

The arrangement of Fig. 2 can be a direct replacement for the kind of brake caliper illustrated in Fig. 1. A particularly advantageous feature is the provision of the slack adjuster 124 on the inboard side (where space is more freely available), thus permitting the outboard side to have minimum protrusion towards the wheel - this in turn improves design freedom on the outboard side.

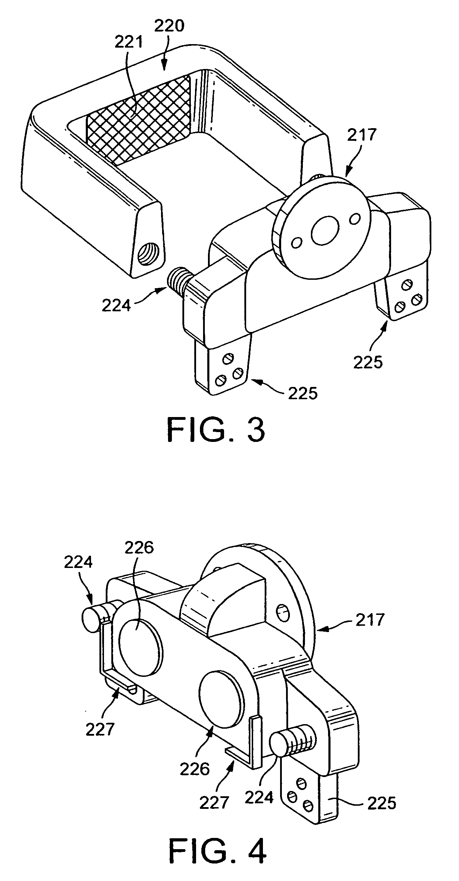

Figs. 3 and 4 schematically illustrates the bridge 220 and outboard pad 221. The caliper body 217 has two slack adjusters 224 for the bridge, and has depending legs 225 for attachment to the vehicle axle. The actuator (not shown) directly applies movement to the inboard pad (not shown) via tappets 226. Slideways 227 are illustrated for the inboard pad.

In order to obtain the necessary movement for operation of the slack adjusters 224, the caliper body 217 is mounted on the axle for sliding movement (e.g. via a fixed carrier as illustrated in Fig. 1), or alternatively a sliding or 'compliant' rotor may be utilised with a fixed caliper/axle mounting. In the latter case, a sliding rotor is allowed to move outwardly on application of the inboard pad, until the outboard pad is in contact; axial rotor movement of 1-2 mm is sufficient to accommodate the outboard running clearance. Drive from the rotor to the hub may be by any suitable means, such as splines.

As best seen in figure 2 the bridge 120 is wholly on the outboard side of the housing 117A and is spaced therefrom by a space S. The slack adjuster 124 spans this space. In further embodiments, the bridge could extend to the inboard side of the housing 117A and define a similar space. This space again can be spanned by an appropriate slack adjuster, though in this circumstance, as the outboard pad wears, the slack adjuster will be adapted to increase the space, thereby moving the bridge inboard.

## Claims

1. A disc brake caliper (117) comprising an inboard side housing, an actuation element movable relative to said housing for direct application for an inboard side brake pad (119), a bridge (120) from said housing to the outboard side and for direct application of an outboard side brake pad (121), and an inboard side slack adjuster (124) between said bridge and housing and adapted to incrementally move said bridge inboard to compensate in use for wear of an outboard side brake pad, **characterised in that** the caliper further includes an inboard pad slack adjuster (126) between said housing and actuation element, and adapted to incrementally move said actuation element outboard to compensate in use for wear of an inboard side brake pad.

2. A caliper according to claim 1 wherein said bridge extends on the inboard side of said housing to define a spacing, and said inboard side slack adjuster (124) spans said spacing.

3. A caliper according to claim 1 wherein said bridge (120) is wholly on the outboard side of said housing at a spacing, and said inboard side slack adjuster spans said spacing.

4. A caliper according to claim 3 and further including a carrier (116) adapted for rigid fixing relative to a vehicle axle, said carrier having slides, and said bridge mounted on said slides.

5. A caliper according to claim 4 wherein said slides comprise cylindrical pins (123) engageable as a sliding fit in corresponding apertures.

6. A caliper according to claim 5 wherein said pins (123) are fixed relative to said carrier.

7. A caliper according to any of claims 4 to 6 wherein said carrier (116) has inboard and outboard slides, and said bridge has inboard and outboard legs for respective engagement with said slides.

8. A caliper according to claim 7 wherein said housing (117A) is adapted for sliding engagement with said inboard slides.

## Patentansprüche

1. Scheibenbremssattel (117) mit einem Innenseitengehäuse, einem bezüglich des Gehäuses beweglichen Betätigungselement zur direkten Betätigung eines Innenseitenbremsbelags (119), einer Brücke (120) vom Gehäuse zur Außenseite und zur direkten Betätigung eines Außenseitenbremsbelags (121) und einer Innenseitennachstellvorrichtung (124) zwischen der Brücke und dem Gehäuse, die zum inkrementalen Bewegen der Brücke nach innen zum Ausgleich im Gebrauch von Verschleiß eines Innenseitenbremsbelags ausgeführt ist, **dadurch gekennzeichnet, dass** der Sattel des Weiteren eine Innenseitenbelagnachstellvorrichtung (126) zwischen dem Gehäuse und dem Betätigungselement enthält, die zum inkrementalen Bewegen des Betätigungselements zum Ausgleich im Gebrauch von Verschleiß eines Innenseitenbremsbelags ausgeführt ist.

2. Sattel nach Anspruch 1, wobei sich die Brücke auf der Innenseite des Gehäuses zur Definition eines Zwischenraums erstreckt und die Innenseitennachstellvorrichtung (124) den Zwischenraum überbrückt.

3. Sattel nach Anspruch 1, wobei sich die Brücke (120) vollständig auf der Außenseite des Gehäuses an einem Zwischenraum befindet und die Innenseitennachstellvorrichtung den Zwischenraum überspannt.

4. Sattel nach Anspruch 3 und weiterhin mit einem Träger (116), der zur starren Befestigung bezüglich einer Fahrzeugachse ausgeführt ist, wobei der Träger Gleitstücke aufweist und die Brücke auf den Gleitstücken angebracht ist.

5. Sattel nach Anspruch 4, wobei die Gleitstücke zylindrische Zapfen (123) umfassen, die als Gleitpassung in entsprechende Öffnungen passen.

6. Sattel nach Anspruch 5, wobei die Zapfen (123) bezüglich des Trägers festgelegt sind.

7. Sattel nach einem der Ansprüche 4 bis 6, wobei der Träger (116) innen- und außenliegende Gleitstücke aufweist und die Brücke innen- und außenliegende Schenkel zum jeweiligen Eingriff mit den Gleitstücken aufweist.

8. Sattel nach Anspruch 7, wobei das Gehäuse (117A) zum Gleiteingriff mit den innenliegenden Gleitstücken ausgeführt ist.

## Revendications

1. Etrier de frein à disque (117) comportant un logement intérieur, un élément actionneur monté mobile relativement audit logement et servant à l'application directe d'une plaquette intérieure de frein (119), un pont (120) allant dudit logement au côté extérieur et servant à l'application directe d'une plaquette extérieure de frein (121), et un dispositif de rattrapage de jeu intérieur (124) situé entre lesdits pont et logement et adapté à déplacer de manière incrémentielle ledit pont vers l'intérieur pour compenser, durant l'utilisation, l'usure d'une plaquette extérieure, **caractérisé en ce que** l'étrier comprend en outre un dispositif de rattrapage de jeu de plaquette intérieure (126) situé entre lesdits logement et élément actionneur, et adapté à déplacer de manière incrémentielle ledit élément actionneur vers l'extérieur pour compenser, durant l'utilisation, l'usure d'une plaquette intérieure.

2. Etrier selon la revendication 1, dans cet étrier ledit pont s'étend sur le côté intérieur dudit logement pour définir un espacement de décalage et ledit dispositif de rattrapage de jeu intérieur (124) enjambe ledit espacement.

3. Etrier selon la revendication 1, dans cet étrier ledit pont (120) est entièrement du côté extérieur dudit logement dont il est écarté d'un espacement et ledit dispositif de rattrapage de jeu intérieur enjambe ledit espacement.

4. Etrier selon la revendication 3, et comprenant en outre une chape (116) adaptée à être fixée de façon rigide relativement à un essieu d'un véhicule, ladite chape comportant des coulisses, et ledit pont étant monté sur lesdites coulisses.

5. Etrier selon la revendication 4, dans ledit étrier lesdites coulisses comportent des goupilles cylindriques (123) qui peuvent s'engager avec un ajustement glissant dans des ouvertures correspondantes.

6. Etrier selon la revendication 5, dans ledit étrier lesdites goupilles (123) sont fixés par rapport à ladite chape.

7. Etrier selon l'une quelconque des revendications 4 à 6, dans ledit étrier ladite chape (116) comporte des coulisses intérieure et extérieure, et ledit pont comporte des branches intérieure et extérieure destinées à être en engagement respectif avec lesdites coulisses.

8. Etrier selon la revendication 7, dans ledit étrier ledit logement (117A) est adapté à l'engagement coulissant avec lesdites coulisses intérieures.
